# EUROPEAN PATENT SPECIFICATION

(11) **EP 3 265 367 B1**
(45) Date of publication and mention of the grant of the patent: **14.08.2019**
(21) Application number: 16707155.4
(22) Date of filing: 02.03.2016
(51) Int. Cl.: B62D 43/04

(54) **VEHICLE SPARE WHEEL SUPPORT APPARATUS**
TRÄGERVORRICHTUNG FÜR FAHRZEUGRESERVERAD
APPAREIL DE SUPPORT DE ROUE DE SECOURS DE VÉHICULE

(30) Priority: 03.03.2015 IN 602DE2015; 08.05.2015 GB 201507882
(43) Date of publication of application: 10.01.2018
(73) Proprietor: Jaguar Land Rover Limited, Coventry, Warwickshire CV3 4LF (GB)
(72) Inventor: PANDA, Rajesh, Coventry Warwickshire CV3 4LF (GB); CLAY, Roger, Coventry Warwickshire CV3 4LF (GB); PARSONS, Bill, Coventry Warwickshire CV3 4LF (GB); MCKENZIE, Craig, Coventry Warwickshire CV3 4LF (GB)
(74) Representative: Lockey, Robert Alexander
(86) International application number: PCT/EP2016/054395
(87) International publication number: WO 2016/139231

(56) References cited:
- US-A- 6 079 932
- US-A1- 2004 265 102
- US-A1- 2010 186 467
- US-A1- 2012 266 454

## Description

### TECHNICAL FIELD

The present disclosure relates to a vehicle spare wheel support apparatus; and to a vehicle incorporating spare wheel support apparatus.

### BACKGROUND

It is known from US 20120266454 a protection member for a vehicle road wheel. The protection member includes a plurality of unequal length pins configured and positioned to engage holes of the road wheel utilized for mounting the road wheel. A winch assembly includes a winch mechanism that winds and unwinds a cable coupled to a wheel lift collar. The collar couples to the protection member, which in turn couples to a vehicle road wheel. The collar is permanently connected to the cable and is fed through a central aperture in the road wheel to remove the road wheel.

It is against this backdrop that the present invention has been conceived. At least in certain embodiments, the present invention sets out to overcome or ameliorate some of the shortcomings associated with the prior art arrangements.

In US6079932, a support member for supportively holding a spare tire beneath a vehicle includes a platform section having a cutout area formed therein, the cutout area having an upper cutout portion and a lower cutout portion, and an insert which fits engagingly into the cutout area of the support member.

In US2012/0266454, a protection member for a vehicle road wheel is described which protects the decorative part of the wheel.

### SUMMARY OF THE INVENTION

Aspects of the present invention relate to apparatus for supporting a spare wheel; and to a vehicle incorporating spare wheel support apparatus.

According to a further aspect of the present invention there is provided apparatus for supporting a spare wheel under a vehicle, the apparatus comprising:
a retractable cable;
a cable guide for said cable; and
a wheel support assembly comprising:
   at least one wheel support member;
   a connecting post for projecting through an opening in the spare wheel for connection to the cable;
   connecting means for releasably connecting the cable to the connecting post; and
   a protective cover (15) for extending over a style surface of the spare wheel;
wherein the cable guide comprises a cable outlet having an outwardly flared profile.

The cable outlet is arranged to face the connecting post of the wheel support assembly. Thus, as the cable is retracted, the outwardly flared profile of the cable outlet helps to guide the connecting post into position for storage. The outwardly flared profile of the cable outlet can facilitate alignment of the spare wheel, for example if the spare wheel is initially offset from the cable outlet. The outwardly flared profile of the cable outlet can define a substantially continuous surface, for example in the form of an outwardly tapered cone or a curved surface.

The connecting means enables the wheel support assembly to be selectively released from the cable, thereby facilitating the introduction and removal of the spare wheel.

The cable guide can comprise a conduit and the cable outlet can be defined at a distal end of the conduit. In use, the outwardly flared profile of the cable guide outlet can help to guide the cable during raising and lowering of the spare wheel.

In certain embodiments, the cable outlet can be operable to engage the connecting post, for example when the spare wheel is not in situ. When the cable is fully retracted, an end portion of the connecting post can positively locate in the cable outlet. In one arrangement, the cable outlet can be in the form of a female coupling for receiving the end portion of the connecting post.

In use, the spare wheel is supported in a stored position when the cable is retracted. At least in certain embodiments, the spare wheel can be inclined relative to a longitudinal axis of the vehicle when in said stored position. Thus, the spare wheel can be stored in a non-horizontal position. The outwardly flared profile of the cable outlet can help to align the wheel support assembly (and the spare wheel) as it is raised to a storage position. A front section of the spare wheel (i.e. the portion of the spare wheel disposed towards a front of the vehicle) can be disposed at a height lower than a rear section of the spare wheel (i.e. the portion of the spare wheel disposed towards a rear of the vehicle). This arrangement can provide improved clearance at the rear of the vehicle, for example to increase a vehicle departure angle. In arrangements in which the cable guide comprises a conduit, the conduit can be inclined at an acute angle relative to the longitudinal axis of the vehicle. The cable guide conduit can be inclined such that the distal end is operatively directed towards a rear of the vehicle. A longitudinal axis of the conduit can be inclined so as at least substantially to match a central (rotational) axis of the spare wheel. This arrangement of the cable support conduit can help to guide the spare wheel into an inclined position for storage.

The connecting means can be in the form of an engagement surface for cooperating with a stop member disposed on the cable. The stop member is fixedly mounted to the cable. When the cable is retracted, the stop member engages the engagement surface of the connecting means. At least in certain embodiments, relative movement of the spare wheel can be inhibited when the cable is retracted to support the spare wheel under the vehicle. A spring member can be disposed on the cable for positioning between the stop member and the engagement surface.

The engagement surface can be defined in a chamber formed in said connecting post. The engagement surface can be disposed at a first longitudinal end of the chamber. The chamber can be closed at a second longitudinal end, for example by a closing surface. This arrangement can inhibit access to the cable when the spare wheel is supported in a stored position. The closing surface can be formed at an opposite end of the chamber to the engagement surface. The chamber can be open to a first side and/or to a second side. At least in certain embodiments, this arrangement can facilitate introduction of the stop member (and the spring member, if present) into the chamber.

The connecting post can comprise a laterally extending slot for removably receiving the cable. The lateral slot can open into an axial aperture for receiving the cable. The laterally extending slot can extend in a radial direction.

Each wheel support member can be configured to engage a retaining surface surrounding a bolt hole formed in said spare wheel. The retaining surface is typically engaged by a head of a retaining bolt to mount the spare wheel to a vehicle hub assembly. The at least one wheel support member can be sized to locate within a recess formed in the spare wheel to receive the head of the retaining bolt. The at least one wheel support member can be in the form of a cylindrical member.

The at least one wheel support member and the connecting post can be fixedly connected to each other. The at least one wheel support member and the connecting post can be formed integrally, for example case from steel or a metal alloy. Alternatively, the at least one wheel support member and the connecting post can be moulded from a plastics material or a composite material.

The connecting post has a first end and a second end. The connecting post has an end portion disposed at the first end. The end portion of the connecting post can configured to be connected to the cable. In use, the end portion is inserted through the opening in the spare wheel for connection to the cable. The second end of the connecting post can be connected to the wheel support member.

The opening can be a central aperture of the spare wheel. The connecting post can be configured to project through the central aperture. The opening can be a bore extending through the spare wheel.

The apparatus can comprise a protective cover for extending over a style surface of the spare wheel. A resilient member, such as a foam substrate, can be disposed on an inner surface of the protective cover for contacting the spare wheel.

The protective cover can comprise a radially outer rim for extending around an outer edge of the spare wheel, for example around an outer edge of a tyre.

According to a further aspect of the present invention there is provided a vehicle comprising apparatus as described herein. The vehicle can have a spare wheel having a style surface. The spare wheel can be supported under the vehicle such that the style surface faces downwardly. An internal region of the wheel can be open towards the underside of the vehicle. This provides additional usable space for positioning vehicle systems or components. By way of example, a compressor and/or a reservoir for an air suspension system can be positioned within the internal volume of the spare wheel.

The spare wheel is supported in a stored position when the cable is retracted to lift the wheel support assembly. At least in certain embodiments, the spare wheel can be supported in an inclined position when in said stored position. In particular, the spare wheel can be inclined relative to a longitudinal axis of the vehicle when stored. A front section of the spare wheel (i.e. the portion of the spare wheel disposed towards a front of the vehicle) can be disposed at a height lower than a rear section of the spare wheel (i.e. the portion of the spare wheel disposed towards a rear of the vehicle). This arrangement can provide improved clearance at the rear of the vehicle, for example to increase a vehicle departure angle. The outwardly flared profile of the cable outlet can help to align the wheel support assembly (and the spare wheel) as it is raised to a storage position.

The retractable cable can be fixedly connected to the vehicle. A retracting mechanism, such as a winch, can be provided for retracting the cable.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the present invention will now be described, by way of example only, with reference to the accompanying figures, in which:
Figure 1 shows a longitudinal sectional view of a vehicle incorporating a spare wheel spare wheel support apparatus in accordance with an embodiment of the present invention;
Figure 2 shows an enlarged sectional view of the spare wheel spare wheel support apparatus shown in Figure 1;
Figure 3 shows an enlarged sectional view of a centre portion of the spare wheel spare wheel support apparatus shown in Figure 2;
Figure 4A shows a transverse sectional view of the spare wheel spare wheel support apparatus in accordance with an embodiment of the present invention;
Figure 4B shows an exploded view of the spare wheel support apparatus in accordance with an embodiment of the present invention; and
Figure 5 shows a perspective view of the spare wheel spare wheel support apparatus in combination with a spare wheel.

### DETAILED DESCRIPTION

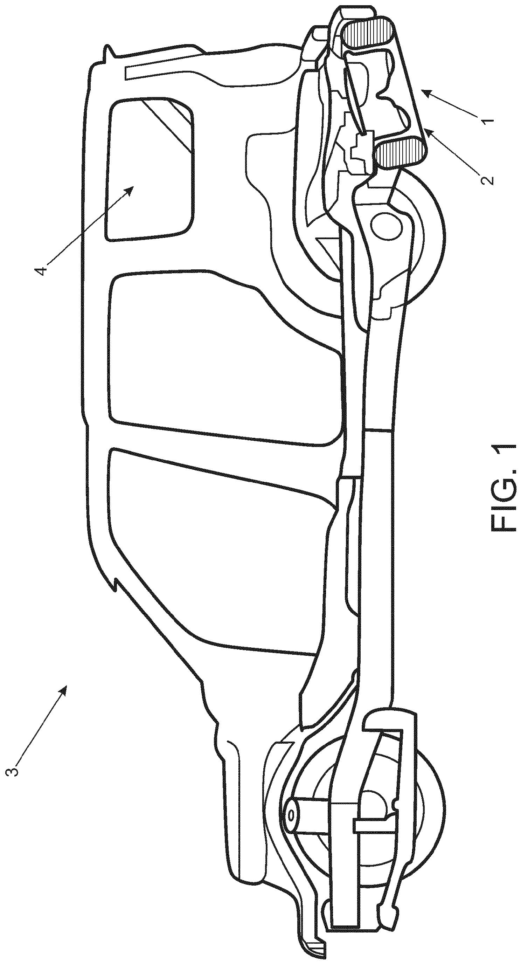

Apparatus 1 for supporting a spare wheel 2 in accordance with an embodiment of the present invention will now be described with reference to the accompanying Figures. As shown in Figure 1, the spare wheel support apparatus 1 is configured to support the spare wheel 2 under a vehicle 3 in a rearwards position beneath an aft storage compartment 4. The vehicle 3 in the present embodiment is an off-road vehicle, but the spare wheel support apparatus 1 is applicable to other vehicle types.

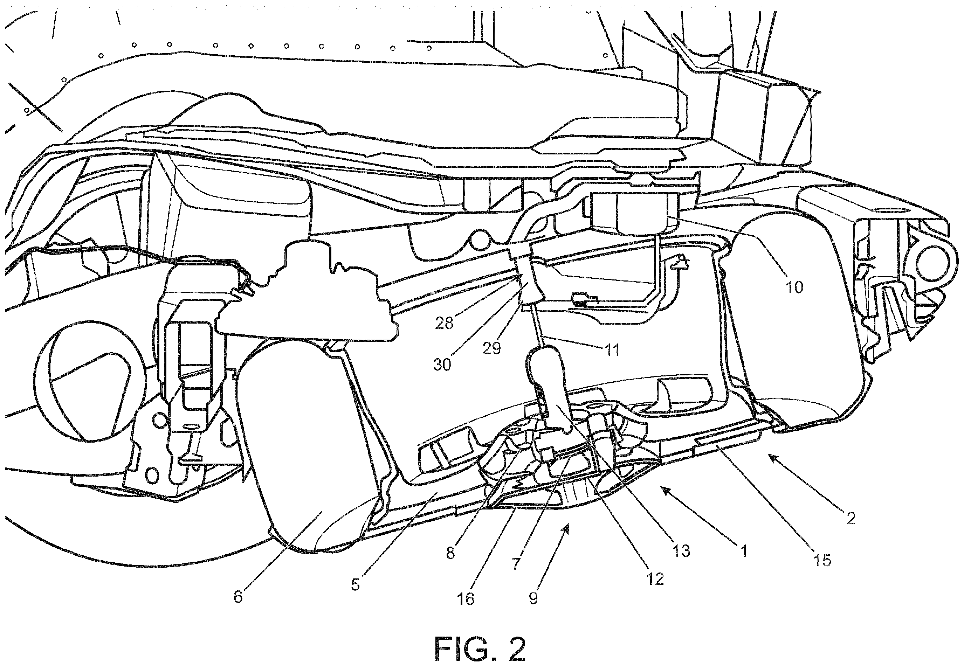

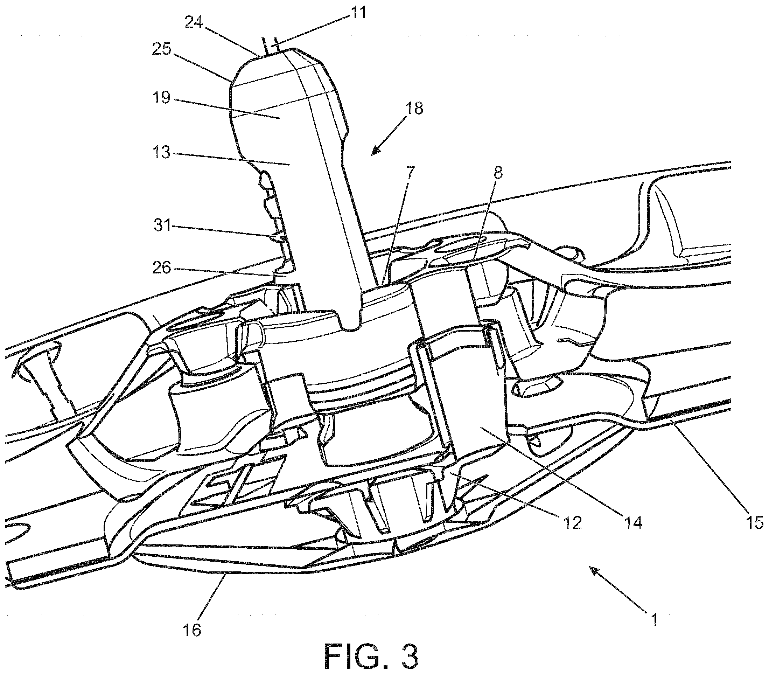

As shown in Figure 2, the spare wheel 2 is a conventional assembly comprising a wheel (rim) 5 and a tyre 6. The wheel 5 in the present embodiment is a one-piece casting, for example a metal alloy casting. The wheel 5 has an inner surface and an outer surface. In use, the inner surface faces inwardly (i.e. towards a longitudinal centreline of the vehicle 3) and the outer surface faces outwardly (i.e. away from the longitudinal centreline of the vehicle 3). Since the outer surface of the wheel 5 is visible in normal use (and may comprise style elements), it can be referred to as a "style surface", a "decorative surface" or an "A-surface". The term "style surface" is used herein to refer to the outer surface of the wheel 5. As shown in Figure 3, the wheel 5 comprises a central aperture 7 and a plurality of bolt holes 8 for receiving mounting bolts to mount the spare wheel 2 to a vehicle hub assembly for connection to an axle of the vehicle. In use, the heads of the mounting bolts engage a retaining surface extending around the bolt holes 8. The wheel 5 is profiled to form an internal volume which is generally cylindrical and, in use, houses a brake rotor and a brake calliper (not shown). The spare wheel 2 in the present embodiment is a full-size wheel, but it could be a space-saver wheel.

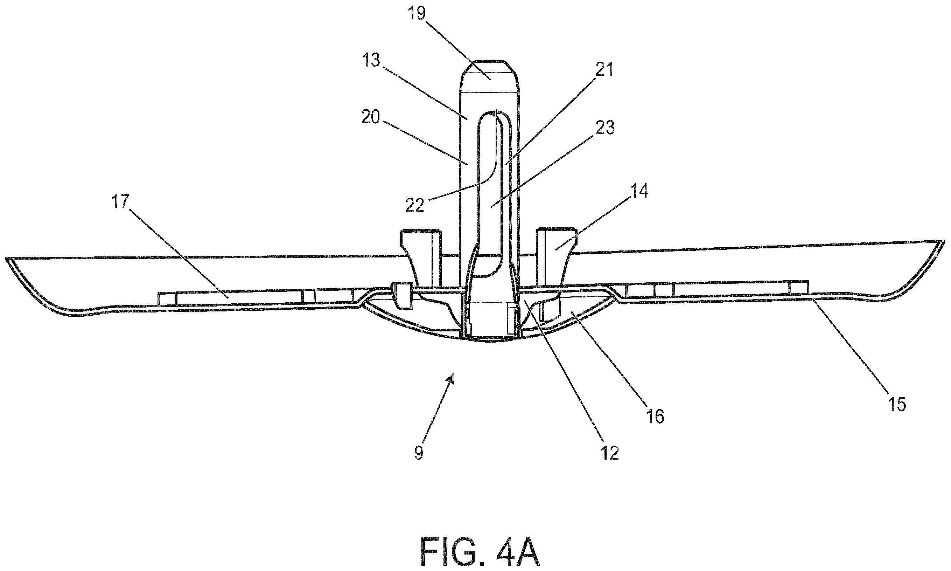

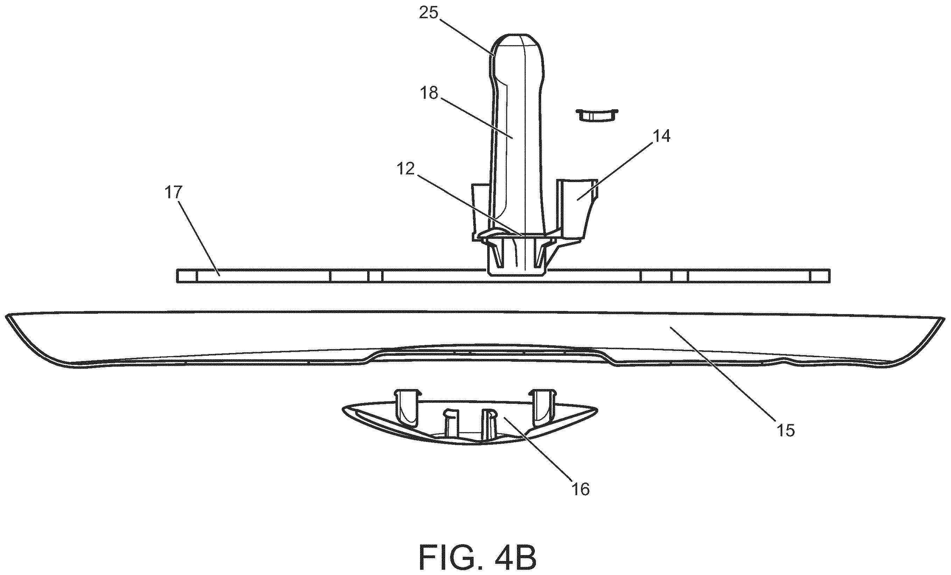

The spare wheel support apparatus 1 comprises a wheel support assembly 9, a winch 10 and a cable 11. As shown in Figure 4A, the wheel support assembly 9 comprises a base plate 12, a connecting post 13, three (3) wheel support members 14 (only two of which are visible in Figure 4A), an outer cover 15 and a centre cap 16. The wheel support members 14 are configured to cooperate with the wheel 5 to support the spare wheel 2 to the vehicle 3. In particular, each wheel support member 14 comprises a cylindrical member for engaging the retaining surface extending around the bolt holes 8. As shown in Figure 4B, a resilient insert 17, such as a foam member, is disposed on an inner surface of the outer cover 15 to protect the style surface of the spare wheel 2. The resilient insert 17 is circular and has a diameter which is equal to or greater than the diameter of the style face of the wheel 5. The base plate 12, the connecting post 13 and the wheel support members 14 are cast from a metal alloy (either as a single component or as separate components which are welded together). The outer cover 15 and the centre cap 16 are moulded from a resilient plastics material, such as polypropylene. The centre cap 16 comprises resilient locking members (not shown) for engaging the outer cover 15 to retain the centre cap 16 in position.

The connecting post 13 comprises an elongated cylindrical member 18 which projects from the base plate 12. The cylindrical member 18 is arranged to extend through the central aperture 7 of the wheel 5. The cylindrical member 18 comprises an end portion 19, and first and second side members 20, 21. The end portion 19 has a curved outer profile to facilitate insertion through the central aperture7 of the wheel 5. An underside of the end portion 19 defines an engagement surface 22 for cooperating with the cable 11. An internal chamber 23 is formed between the first and second side members 20, 21. An axial aperture 24 and a radially extending slot 25 are formed in the end portion 19. The slot 25 enables the cable 11 to be removably located in the axial aperture 24, thereby enabling the wheel support assembly 9 to be releasably connected to the cable 11.

The winch 10 is a hand-operated mechanism comprising a rotatable drum (not shown) disposed within a winch housing 27. The winch 10 comprises a winding mechanism operable from an interior of the storage compartment 4 to wind the cable 11 onto the drum, thereby retracting the cable 11. The winch 10 comprises an unwinding mechanism (not shown) operable to unwind the cable 11 from the drum. The winch 10 comprises a cable guide 28 which aligns with the axial aperture24 to guide the cable 11 as it is wound onto the drum. The cable guide 28 has a cable outlet 29 which is flared outwardly towards the connecting post 13. The cable outlet 29 forms a substantially continuous surface for guiding the cable 11, for example if the wheel support assembly 9 is offset (an angular offset and/or a translational offset) from the cable outlet 29. In the present embodiment the cable guide 28 is in the form of a conduit 30 and the cable outlet 29 is formed at a distal end thereof. The flared profile of the cable outlet 29 can facilitate alignment of the connecting post 13 and the spare wheel 2 when the cable 11 is retracted. The conduit 30 is arranged such that, when the spare wheel 2 is in a stored position, a rotational axis of the spare wheel 2 is arranged substantially coincident with a longitudinal axis of the conduit 30. The cable 11 has a stop member 26 for cooperating with the engagement surface 22 defined on the underside of the end portion 19 of the cylindrical member 18. A compression spring 31 is disposed on the cable 11 for positioning between the stop member 26 and the engagement surface 22. A washer can optionally be provided on the cable 11 between the stop member 26 and the compression spring 31 to transfer loads. As outlined above, the slot 25 allows the cable 11 to be removably located in the axial aperture 24. The internal chamber 23 is sized to accommodate the stop member 26 and the compression spring 31 therein.

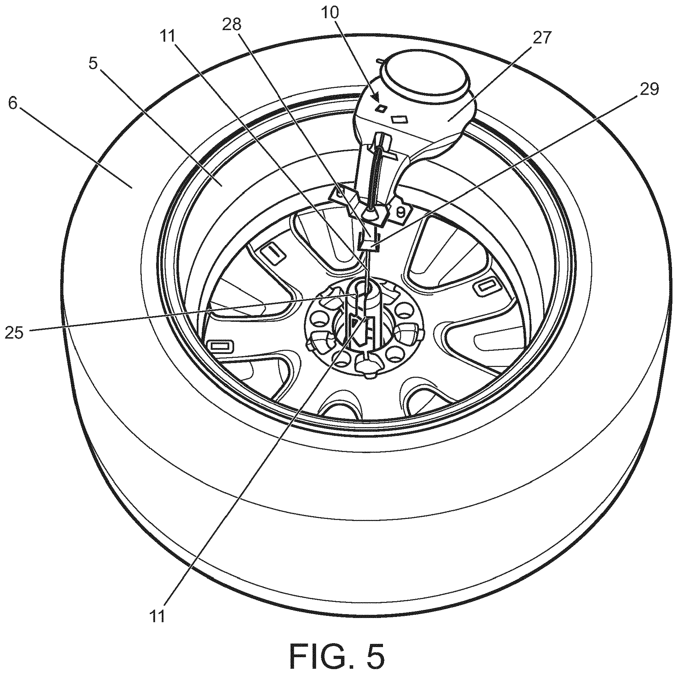

A perspective view of the spare wheel 2 with the spare wheel support apparatus 1 in situ is shown in Figure 5. The connecting post 13 is inserted through the central aperture 7 of the wheel 5; and the wheel support members 14 are each positioned in engagement with the retaining surface associated with the corresponding bolt holes 8. The cable 11 is disposed in the axial aperture 24 with the stop member 26 and the compression spring 31 located within the internal chamber 23 formed in the connecting post 13. In this configuration, the wheel support assembly 9 is connected to the cable 11. By operating the winch 10, the spare wheel 2 can be raised into a stored position under the vehicle 3. The outer cover 15 and the centre cap 16 help to prevent damage to the spare wheel 2, including the style surface of the wheel 5, when the vehicle 3 is driven.

The operation of the spare wheel support apparatus 1 will now be described for illustrative purposes. As shown in Figures 1 and 2, the spare wheel 2 is initially supported in a stored position under the vehicle 3. The spare wheel 2 is supported in this position by the spare wheel support apparatus 1. The winch 10 is operated to extend the cable 11, thereby lowering the spare wheel 2 onto the ground. The outer cover 15 helps to protect the style surface of the wheel 5 from damage when the spare wheel 2 is lowered onto the ground. The winch 10 is operated until sufficient cable 11 has been released to enable the cable 11 to be removed through the slot 25 and the stop member 26 to be removed from the internal chamber 23. The wheel support assembly 9 is thereby released from the winch 10. The spare wheel 2 can be lifted off of the wheel support assembly 9 ready for use, for example to be fitted in place of another wheel fitted to the vehicle. To return the spare wheel 2 to its stored position, the connecting post 13 is inserted through the central aperture 7 so as to project inwardly from the style surface of the wheel 5. The outer cover 15 again functions to protect the style surface of the wheel 5 from damage as the spare wheel 2 is positioned under the vehicle 3. The cylindrical member 18 extends upwardly through the central aperture 7 to enable the cable 11 to be re-attached. Specifically, the cable 11 is inserted through the slot 25 and located in the axial aperture 24. The stop member 26 and the compression spring 31 locate in the internal chamber 23 within the connecting post 13. The winch 10 is then operated to retract the cable 11. The stop member 26 cooperates with the engagement surface 22, causing the compression spring 31 to be compressed. The continued retraction of the cable 11 causes the spare wheel 2 to be lifted by the cable 11. If the spare wheel 2 is not in situ, the end portion 19 of the cylindrical member 18 can locate in the outwardly flared cable outlet 29 of the cable guide 28. The winch 10 is locked in position, for example by a pawl, to secure the spare wheel 2.

By locating the stop member 26 and the compression spring 31 within the connecting post 13, access to the cable 11 is restricted once the spare wheel 2 is in its stored position. Indeed, even if a downwards force is applied to the spare wheel 2, access to the cable 11 is limited. The first and second side members 20, 21 inhibit access to the cable 11. The cable guide 28 also functions as a protective element around the cable 11 above the spare wheel 2. Thus, at least in certain embodiments, the spare wheel support apparatus 1 can function as an anti-theft device.

Furthermore, the spare wheel support apparatus 1 enables the spare wheel 2 to be stored with the style face facing downwardly. The internal volume defined by the wheel 5 is therefore open towards the underside of the vehicle 3. This provides additional usable space for positioning vehicle systems or components. By way of example, a compressor and/or a reservoir for an air suspension system can be positioned within the internal volume of the spare wheel 2. It will be appreciated that, in use, the spare wheel 2 can provide protection for any such systems or components disposed in this region.

As shown in Figure 1, the spare wheel support apparatus 1 described herein allows the spare wheel 2 to be inclined relative to a longitudinal axis of the vehicle 3 when in its stored position. To facilitate this inclined mounting arrangement, a central axis of the cable guide 28 is inclined at an angle less than 90° relative to the longitudinal axis of the vehicle 3. The inclined arrangement of the cable guide 28 maintains the cable 11 substantially perpendicular to the wheel 5. This arrangement can help to reduce operational loads on the cable 11. This inclined arrangement allows the rear of the spare wheel 2 to be supported higher than the front of the spare wheel 2. At least in certain embodiments, this arrangement can increase a departure angle of the vehicle 3.

It will be appreciated that various changes and modifications can be made to the spare wheel support apparatus 1 described herein without departing from the scope of the present application. For example, the connecting post 13 can comprise a latching mechanism for retaining the cable 11. A spring-biased member or a resilient clip could be provided to retain the cable 11 within the axial aperture 24.

The outer cover 15 can be profiled to define styling features to improve the aesthetic appearance of the spare wheel support apparatus 1. The outer cover 15 can have a substantially continuous surface or can have cut-outs.

The winch 10 has been described herein as a manually actuated mechanism. It will be understood that the winch 10 could comprise an electric motor for retracting the cable 11. A winch control means, such as a button or switch, could be provided in the vehicle 3, for example in the aft storage compartment 4.

## Claims

1. Apparatus (1) for supporting a spare wheel (2) under a vehicle (3), the apparatus comprising:
a retractable cable (11);
a cable guide (28) for said cable; and
a wheel support assembly (9) comprising:
at least one wheel support member (14) configured to engage a retaining surface surrounding a bolt hole (8) formed in the spare wheel;
a connecting post (13) for projecting through an opening in the spare wheel for connection to the cable; and
connecting means for releasably connecting the cable to the connecting post; and
a protective cover (15) for extending over a style surface of the spare wheel;
wherein the cable guide comprises a cable outlet having an outwardly flared profile.

2. Apparatus as claimed in claim 1, wherein the connecting means is in the form of an engagement surface (22) formed in said connecting post for cooperating with a stop member (26) disposed on the cable.

3. Apparatus as claimed in claim 2, wherein the engagement surface is defined in a chamber (23) formed in said connecting post.

4. Apparatus as claimed in claim 3, wherein said chamber is open to a first side and/or a second side.

5. Apparatus as claimed in any one of claims 1 to 4, wherein the connecting post comprises a laterally extending slot (25) for removably receiving the cable.

6. Apparatus as claimed in any one of the preceding claims, wherein the at least one wheel support member and the connecting post are fixedly connected to each other.

7. Apparatus as claimed in any one of the preceding claims, wherein the cable guide comprises a conduit (30) and the cable outlet is formed at a distal end of said conduit.

8. Apparatus as claimed in any one of the preceding claims, wherein the connecting post is configured to project through a central aperture (7) of the spare wheel.

9. Apparatus as claimed in any preceding claim, wherein the protective cover comprises a radially outer rim for extending around an outer edge of the spare wheel.

10. Apparatus as claimed in any preceding claim, wherein a resilient member (17) is disposed on an inner surface of the protective cover for contacting the spare wheel.

11. A vehicle comprising apparatus as claimed in any one of the preceding claims.

12. A vehicle as claimed in claim 11 in combination with a spare wheel having a style surface, wherein the spare wheel is supported under the vehicle such that the style surface faces downwardly.

13. A vehicle as claimed in claim 11 or claim 12, wherein, in use, the spare wheel is supported in a stored position inclined relative to a longitudinal axis of the vehicle such that a front section of the spare wheel is disposed at a height lower than a rear section of the spare wheel.

## Patentansprüche

1. Einrichtung (1) zum Tragen eines Ersatzrads (2) unter einem Fahrzeug (3), wobei die Einrichtung Folgendes umfasst:
ein einziehbares Kabel (11);
eine Kabelführung (28) für das Kabel; und
eine Radträgeranordnung (9), Folgendes umfassend:
wenigstens ein Radträgerelement (14), das konfiguriert ist, um eine Halterungsoberfläche in Eingriff zu nehmen, die ein Bolzenloch (8) umgibt, das in dem Ersatzrad ausgebildet ist;
eine Verbindungsstange (13) zum Hervorstehen durch eine Öffnung in dem Ersatzrad zur Verbindung mit dem Kabel; und
ein Verbindungsmittel zum lösbaren Verbinden des Kabels mit der Verbindungsstange; und
eine Schutzabdeckung (15) zum Erstrecken über eine Stiloberfläche des Ersatzrads;
wobei die Kabelführung einen Kabelabgang mit einem nach außen trichterförmig ausgeweiteten Profil umfasst.

2. Einrichtung nach Anspruch 1, wobei das Verbindungsmittel in der Form einer Eingriffsoberfläche (22) ist, die in der Verbindungsstange ausgebildet ist, um mit einem Stoppelement (26) zusammenzuwirken, das auf dem Kabel angeordnet ist.

3. Einrichtung nach Anspruch 2, wobei die Eingriffsoberfläche in einer Kammer (23) definiert ist, die in der Verbindungsstange ausgebildet ist.

4. Einrichtung nach Anspruch 3, wobei die Kammer zu einer ersten Seite hin und/oder einer zweiten Seite hin offen ist.

5. Einrichtung nach einem der Ansprüche 1 bis 4, wobei die Verbindungsstange einen sich seitlich erstreckenden Schlitz (25) zum lösbaren Aufnehmen des Kabels umfasst.

6. Einrichtung nach einem der vorhergehenden Ansprüche, wobei das wenigstens eine Radträgerelement und die Verbindungsstange fest miteinander verbunden sind.

7. Einrichtung nach einem der vorhergehenden Ansprüche, wobei die Kabelführung ein Rohr (30) umfasst und der Kabelabgang an einem distalen Ende des Rohrs ausgebildet ist.

8. Einrichtung nach einem der vorhergehenden Ansprüche, wobei die Verbindungsstange konfiguriert ist, um durch eine zentrale Öffnung (7) des Ersatzrads hervorzustehen.

9. Einrichtung nach einem der vorhergehenden Ansprüche, wobei die Schutzabdeckung einen radial äußeren Rand zum Erstrecken um eine äußere Kante des Ersatzrads herum umfasst.

10. Einrichtung nach einem der vorhergehenden Ansprüche, wobei ein elastisches Element (17) an einer inneren Oberfläche der Schutzabdeckung angeordnet ist, um das Ersatzrad zu berühren.

11. Fahrzeug, umfassend eine Einrichtung nach einem der vorhergehenden Ansprüche.

12. Fahrzeug nach Anspruch 11 in Kombination mit einem Ersatzrad mit einer Stiloberfläche, wobei das Ersatzrad unter dem Fahrzeug derart getragen wird, dass die Stiloberfläche nach unten weist.

13. Fahrzeug nach Anspruch 11 oder 12, wobei das Ersatzrad in Verwendung in einer verstauten Position getragen wird, die relativ zu einer Längsachse des Fahrzeugs derart geneigt ist, dass ein vorderer Bereich des Ersatzrads in einer niedrigeren Höhe als ein hinterer Bereich des Ersatzrads angeordnet ist.

## Revendications

1. Appareil (1) pour supporter une roue de secours (2) sous un véhicule (3), l'appareil comprenant :
un câble rétractable (11) ;
un guide-câble (28) pour ledit câble ; et
un ensemble support de roue (9) comprenant :
au moins un élément de support de roue (14) conçu pour entrer en prise avec une surface de retenue entourant un trou de boulon (8) formé dans la roue de secours ;
un montant de raccordement (13) destiné à faire saillie à travers une ouverture dans la roue de secours pour le raccordement au câble ; et
des moyens de raccordement pour raccorder de manière amovible le câble au montant de raccordement ; et
une housse de protection (15) destinée à s'étendre sur une surface de style de la roue de secours ;
dans lequel le guide-câble comprend une sortie de câble ayant un profil évasé vers l'extérieur.

2. Appareil selon la revendication 1, dans lequel le support de raccordement est sous la forme d'une surface d'entrée en prise (22) formée dans ledit montant de raccordement destiné à coopérer avec un élément de butée (26) disposé sur le câble.

3. Appareil selon la revendication 2, dans lequel la surface d'entrée en prise est définie dans une chambre (23) formée dans ledit montant de raccordement.

4. Appareil selon la revendication 3, dans lequel ladite chambre est ouverte sur un premier côté et / ou un second côté.

5. Appareil selon l'une quelconque des revendications 1 à 4, dans lequel le montant de raccordement comprend une fente s'étendant latéralement (25) pour recevoir le câble de manière amovible.

6. Appareil selon l'une quelconque des revendications précédentes, dans lequel au moins l'un des éléments de support de roue et le montant de raccordement sont reliés de manière fixe l'un à l'autre.

7. Appareil selon l'une quelconque des revendications précédentes, dans lequel le guide-câble comprend un conduit (30) et la sortie de câble est formée à une extrémité distale dudit conduit.

8. Appareil selon l'une quelconque des revendications précédentes, dans lequel le montant de raccordement est conçu pour faire saillie à travers une ouverture centrale (7) de la roue de secours.

9. Appareil selon l'une quelconque des revendications précédentes, dans lequel la housse de protection comprend un rebord radialement externe destiné à s'étendre autour d'un bord externe de la roue de secours.

10. Appareil selon l'une quelconque des revendications précédentes, dans lequel un élément élastique (17) est disposé sur une surface interne du de la housse de protection pour venir en contact avec la roue de secours.

11. Véhicule comprenant un appareil selon l'une quelconque des revendications précédentes.

12. Véhicule selon la revendication 11, en combinaison avec une roue de secours ayant une surface de style, dans lequel la roue de secours est supportée sous le véhicule de sorte que la surface de style soit orientée vers le bas.

13. Véhicule selon la revendication 11 ou la revendication 12, dans lequel, lors de l'utilisation, la roue de secours est supportée dans une position de rangement inclinée par rapport à un axe longitudinal du véhicule de sorte qu'une section avant de la roue de secours soit disposée à hauteur inférieure à une partie arrière de la roue de secours.
